# EUROPEAN PATENT APPLICATION

(11) **EP 0 940 904 A2**
(43) Date of publication of application: **08.09.1999**
(21) Application number: 98309409.5
(22) Date of filing: 17.11.1998
(51) Int. Cl.: H02J 9/02

(54) **Emergency lighting system**

(30) Priority: 17.11.1997 GB 9724286
(71) Applicant: JSB Electrical Plc, Crewe, Cheshire CW4 8AB (GB)
(72) Inventor: Khellaf, Fariz, Dr., Audenshaw, Manchester M34 5FD (GB)
(74) Representative: Hamilton, Alistair

(57) **Abstract**

An emergency lighting system capable of performing self-testing is disclosed. The system comprises a main power supply and a plurality of lighting units each having mains failure circuitry to monitor the main supply and to connect the lighting unit for operation to an auxiliary power supply in the event of failure of the main power supply. Each lighting unit further includes a testing circuit operative, on receipt of a command, to assess the condition of operational readiness of the lighting unit. The system has a control unit. A signal line connects the control to the testing circuit of one or more of the lighting units. In operation, the control unit applies signals to the signal line and detects signals which have been applied to the signal line by a testing circuit. Each one of the testing circuits is identified as from the others by an address. On detection of a signal indicating its address on the signal line, each testing circuit applies to the signal line a signal indicative of the operational readiness of the associated lighting unit.

## Description

The present invention relates to an emergency lighting system.

Emergency lighting is provided in buildings in order to ensure that there remains a minimum level of lighting in the event of failure of mains power to a primary lighting system. The value of emergency lighting is particularly great where a mains power failure accompanies or is occasioned by an emergency which gives rise to a need to evacuate a building. Since emergency lighting can play a role critical to safety, there is a need to perform periodic testing on systems of emergency lighting to ensure that it will work when it is needed.

Conventionally, emergency lighting is tested by manually disconnecting one or more lighting units from a supply of mains power, and then checking by directly inspecting them, that the lighting units in question are illuminated (or remain illuminated, as the case may be). This can, however, be a very time-consuming procedure in a large building with many lighting units. Great care must be taken to ensure that every lighting unit is properly checked. This can happen only if meticulous manual records are kept, which adds further to the time involved.

Hitherto, there have been various proposals with the aim of improving the efficiency with which an emergency lighting system can be tested.

An automatic system for testing emergency lighting is disclosed in UK Patent Application No. 2064791. In this prior art system, a circuit is provided at each lighting unit which circuit includes means for detecting light emitted by the unit, or for guiding light from the unit to a detector at a central location. A disadvantage of this prior art system is that it is relatively difficult to integrate into an existing emergency lighting system and to fit it to an existing emergency lighting unit requires substantial modification to be made to the unit.

It is an aim of the invention to provide an emergency lighting system which is capable of being tested in an automated manner and which offers a minimum of inconvenience in manufacture.

According to a first aspect of the invention there is provided an emergency lighting system comprising:
a main power supply;
a plurality of lighting units each having mains failure circuitry to monitor the main supply and to connect the lighting unit for operation to an auxiliary power supply in the event of failure of the main power supply, and a testing circuit operative, on receipt of a command, to assess the condition of operational readiness of the lighting unit;
a control unit;
a signal line connected to the control unit and to the testing circuit of one or more of the lighting units;
   wherein the control unit is operative to apply signals to the signal line and detect signals which have been applied to the signal line by a testing circuit;
   each one of the testing circuits is identified as from the others by an address, and is operative, on detection of a signal indicating its address on the signal line, to apply to the signal line a signal indicative of the operational readiness of the associated lighting unit.

It has been found that a system embodying the invention can he implemented using lighting units which differ from a conventional lighting unit only by the addition of a testing circuit which can be contained entirely within a body of the lighting unit. This is particularly advantageous because it allows lighting units for use in the system readily to be manufactured alongside conventional lighting units.

Advantageously, the testing circuit may assess the operational readiness of the lighting unit by measurement of a current or a voltage in the lighting unit.

In particularly preferred embodiments, the testing circuit is supplied with power from the signal line. This arrangement minimizes the amount of additional wiring required to implement a system of the present invention as compared with a conventional emergency lighting system.

In a typical embodiment, data is transmitted in the signal line from the central control unit to the testing circuit as a plurality of voltage pulses. Data may be transmitted in the signal line from the testing circuit to the central control unit as a plurality of current pulses.

In most practical embodiments, the testing circuit can operate in a plurality of modes. Such modes typically include a normal mode in which each lighting unit can be checked frequently by the central control unit to ascertain whether the lighting unit is charging normally,has detected a local mains failure, or has ceased to charge properly due to an apparent fault. Additional modes typically allow a test to be carried out on the lighting unit to assess whether it is capable of operation by the auxiliary power supply for a predetermined period.

In embodiments according to the last-preceding paragraph, there may be a first test mode in which each lighting unit is operated by the auxiliary power supply automatically periodically (e.g. once per week) for a predetermined period (e.g. five minutes), at least at the end of which period the current and voltage supplied by the auxiliary power supply is measured and assessed. Additionally, there may be a second test mode in which each lighting unit is operated by the auxiliary power supply under manual control periodically (e.g. once per year) for a predetermined period (e.g. 1-3 hours), at least at the end of which period the current and voltage supplied by the auxiliary power supply is measured and assessed.

Preferably, the central control unit includes programmable data storage means in which information relating to the lighting units of the system can be stored.

Very advantageously, the address of each of the testing circuits can be sat by applying a signal to the testing circuit in order that the address value is stored in a memory device. There may be provided a programming device connectable to the testing circuit to achieve this. The particular advantage of this arrangement is that it obviates the need for a user to set an address manually, for example by setting switches.

According to a second aspect of the invention there is provided an emergency lighting system comprising:
a plurality of lighting units each connected to a power supply line;
a central control unit;
a main power supply and an auxiliary power supply;
a circuit control unit having mains failure circuitry to monitor the main supply and to connect the power supply line to the main power supply during such tide as the main power supply is operational to connect the power supply line to the auxiliary power supply in the event of failure of the main power supply,
and a first testing circuit associated with the circuit control unit operative, on receipt of a command from the central control unit to simulate a failure of the main power supply and to assess the response of the circuit control unit thereto;
a system control unit;
a signal line connected to the control unit and to the circuit control unit;
   wherein the system control unit is operative to apply signals to the signal line and detect signals which have been applied to the signal line by the circuit control unit or luminaires attached thereto;
   each one of the lighting units and the circuit control unit is identified as from the others by an address, and is operative, on detection of a signal indicating its address on the signal line, to apply to the signal line a signal indicative of the operational readiness of the associated unit.

In this aspect, the present invention is applied to a central battery type emergency lighting system.

Embodiments of the invention will now be described in detail, by way of example, with reference to the accompanying drawings in which:
Figure 1 is a schematic block diagram of an emergency lighting system embodying the invention;
Figure 2 is a block diagram of a lighting unit included within the system of Figure 1;
Figure 3 is a circuit diagram showing the main components of a conversion circuit being Part of the lighting unit of Figure 2; and
Figure 4 is a schematic block diagram of & second emergency lighting system embodying the invention.

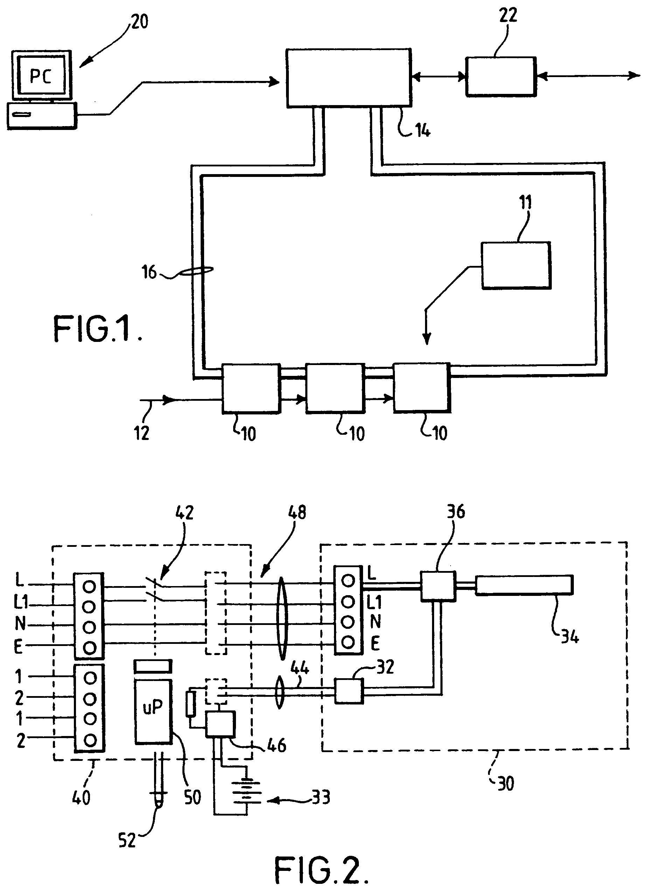

With reference to Figure 1, an emergency lighting system comprises a plurality of emergency lighting units 10 which, for the purpose of this example, each of which is a self-contained luminaire comprising a fluorescent lamp and a rechargeable battery.

Each of the luminaires 10 is connected to a main electrical supply 12. Depending upon the particular requirements of the installation, any or all of the luminaires may be illuminated permanently, switchable, or extinguished permanently during such time as the main electrical supply 12 is operational. In the event of failure of the main electrical supply 12, the luminaires 10 become illuminated automatically.

The system further comprises a central control unit 14. A signal line 16 extends from the central control unit 14 in a loop, to connect to each luminaire in turn, finally to return to the central control unit 14. As well as carrying data signals, the signal line 16 also supplies power to components within the luminaires.

Additional components of the system include a personal computer 20 which can be connected to the central control unit 14, and a network controller 22 by means of which several central control units can communicate with one another.

The central control unit 14, in this embodiment, is similar to an addressable fire alarm control panel, suitably re-programmed. In this way, it is possible for the circuits which apply data to and read data from the signal line 16 to be of a nature which is conventional in the technical field of fire alarm systems. As in the case of a fire alarm control panel, the central control unit is provided with user controls by means of which its operation can be controlled by a user.

With reference now to Figure 2, a lighting unit for use in the system of Figure 1 can be constructed as a modification of a conventional self-contained emergency luminaire. In Figure 2, the box 30 represents a conventional self-contained emergency luminaire. The luminaire comprises battery input terminals 32, a lamp 34 and a switching circuit 36. The luminaire has four input terminals, conventionally labelled L, L1, N and E. The L terminal is connected to a supply of mains electricity which is live at all times other than during a mains failure. The L1 terminal is optionally connected to a switched mains supply which can be used to illuminate the lamp 34 at any time as required. The N and E terminals are respectively connected to the neutral line and the earth line of a mains supply.

In its conventional condition, the switching circuit 36 serves to provide a charging current to the battery terminals 32 to charge a battery connected to them and to supply power to the lamp 38 from the L1 terminal. However, in the event that power to the L terminal ceases, the switching circuit 36 connects the battery terminals 32 to the lamp 34 so as to illuminate the lamp by means of power from a battery connected to the terminals. (It is well understood that further circuitry will be required if the lamp 34 is a fluorescent lamp, but that is not of relevance to the present invention.)

In a lighting unit for use in a system of the present invention, the luminaire described above is provided with a conversion circuit, shown at 40 in Figure 2.

The conversion circuit 40 is constructed as a small encapsulated unit which can be readily fixed within a case of the luminaire. The conversion circuit 40 has four input terminals labelled L, L1, N and E respectively. During installation, these are connected exactly as described above in relation to the conventional luminaire.

The conversion circuit 40 has two further pairs of input terminals, within each pair a first terminal being labelled 1 and a second being labelled 2. Wires of the loop circuit 16 from each of the adjacent devices in the loop are connected to a respective pair of input terminals 1 and 2.

The conversion circuit 40 has four output terminals 48, each of which is connected to a respective one of the input terminals L, L1, N, E of the conventional luminaire 30. The conversion circuit is constructed such that its input terminals N and E are connected directly to the corresponding input terminals on the conventional luminaire 30, and ouch that its input terminals L and L1 are connected to the corresponding input terminals of the conventional luminaire 30 through switch contacts 42 of a relay.

The conversion circuit 40 is provided with a pair of battery input terminals 46 and a battery output lead 44. A rechargeable battery 33 (as would be used with the conventional luminaire 30) is connected to the battery input terminals 46. The battery output lead is connected to the battery terminals 32 on the conventional luminaire 30, such that current flowing between the battery 33 and the switching circuit 36 flows through the conversion circuit 40.

A two-colour indicating LED 52 is provided which is visible externally of the conversion circuit 40.

The conversion circuit further includes a microcontroller 50 which controls all aspects of its operation. The microcontroller 50 of this embodiment has multiple analogue and digital input/output capability and has internal memory for storage of a program and a small amount of data.

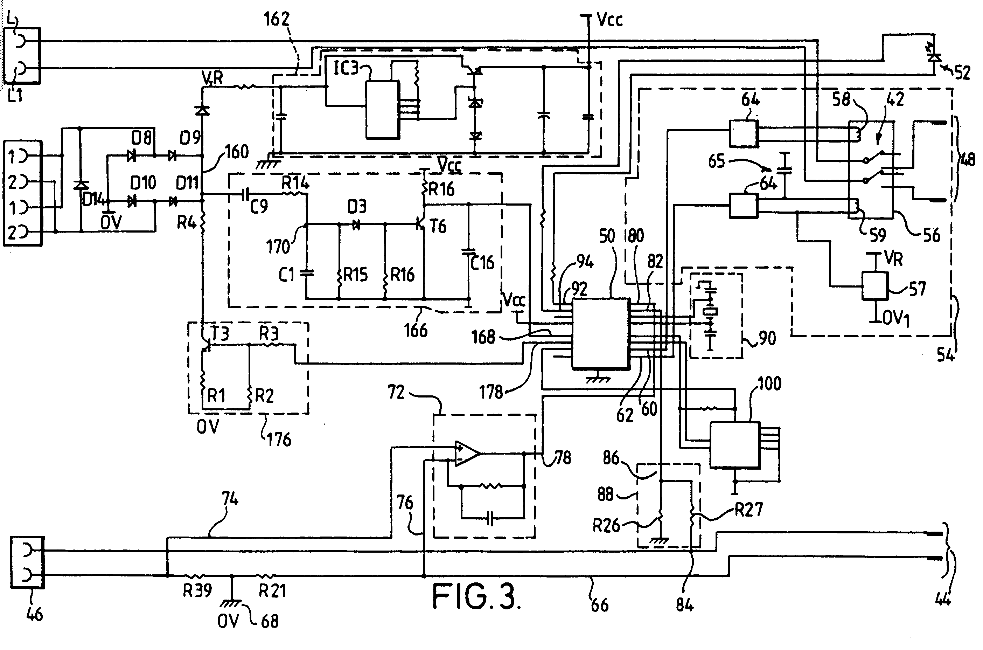

The operation of the conversion circuit 40 will now be described with reference to Figure 3, (Note that the connections for the neutral and earth lines, and many minor components are not shown in Figure 3 in the interest of clarity.)

The conversion circuit 40 is based around a programmable microcontroller 50. The microcontroller 50 controls all of the other stages of the circuit. These will now be described. A power supply (not shown) provides a 0V DC level and a positive DC supply at Vcc.

The conversion circuit 40 includes a mains switching stage 54. The mains switching stage 54 comprises a double-pole latching relay 56. The relay interconnects the mains input at L and L1 to the mains output terminals at 48 through respective normally-closed switch contacts 42. The relay 56 is controlled by a pair of solenoids 58,59 each of which is connected to a respective digital output 60, 62 of the microcontroller 50 through suitable interface circuitry 64. Energisation of a first of the solenoids 58 causes the relay to open its contacts, and energisation of the other solenoid 59 causes the relay to close its contacts. It is the nature of a latching relay that subsequent de-energisation of a solenoid does not cause the state of the relay contacts to change. By means of this arrangement, the microcontroller can selectively connect or disconnect the luminaire 30 and the mains supply, without the need to maintain a solenoid in an energised state.

Under normal operating conditions, the relay 56 is latched closed to complete the connection between the mains input terminals and the mains output terminals 48. The relay 56 is opened only when a test is being carried out as will be described below. However, it is desirable that in the event of a failure occurring during a test, the relay 56 is closed to return the luminaire 10 to its normal operating condition. To this end, a capacitor 65 is provided a first input of the second solenoid 59 which can store sufficient charge to energise the solenoid 59 sufficiently to close the relay 56. A fail-safe circuit 57 is connected to a second input of the second solenoid 59, the fail-safe circuit 57 being operative to discharge the capacitor 65 through the solenoid 59 in the event of a power failure.

Within the conversion circuit, conductors 66,68 interconnect the battery input terminal 46 and the battery output lead 44. In a first of these conductors 66 (connected to the negative side of the battery) comprises two series connected resistors R39,R21. The values of the resistors R39,R21 are sufficiently low that they do not significantly reduce the light output of the lamp when it is under battery power. A point between the resistors at 68 is connected to the 0V level of the conversion circuit 40. A second of the conductors 70 directly interconnects the positive battery input terminal 46 and the positive battery output lead 44 with negligible series resistance.

A current measurement stage 72 is provided in the conversion circuit 40 to measure current flowing through the first conductor 66. The current measurement stage 72 has two input lines 74,76, each connected to the first conductor 66 such that both of the resistors R39,R21 are disposed between the inputs lines 74,76.

Within the current measurement stage 72 (the circuit for which is not shown in full detail in Figure 3) there is provided an amplifying circuit of high input impedance based on an operational amplifier IC. The output of the amplifying circuit provides an output at 78 of the current measurement stage 72. The output 78 of the current measurement stage 78 is fed to a first analogue input 80 of the microcontroller 50.

It will be seen that the voltage appearing across the input lines 74,76 of the current measurement stage 72 will be substantially proportional to the current flowing through the first conductor 66, provided that the resistors R39,R21 are selected such as to exhibit ohmic behaviour under the current which will flow through them during operation of the lamp 34. By proper selection of the gain of the amplifying circuit, it is therefore readily possible to ensure that the voltage at the output of the current measurement stage 72 is proportional to the current in the conductor 66.

A voltage measurement stage 88 is provided to measure the voltage of the second conductor 68. (It should be remembered that the first conductor 66 is tied to 0V, therefore the voltage of the second conductor 68 is, essentially, the voltage across the battery 32.)

The voltage measurement stage 88 has an input line which is connected to the second conductor at 84. The input line is connected through two series connected resistors R26,R27 to 0V. An output line 86 of the voltage measurement stage 88 is connected to a point between the resistors R26,R27. The output line 86 is connected to a second analogue input 82 of the microcontroller 50.

An oscillator stage 90 provides a clock input for the microcontroller 50. The oscillator stage comprises a crystal oscillator which is entirely conventional and will therefore not be described here further.

The LED 52 is connected between first and second digital outputs 92,94 of the microcontroller 50. Each of the first and second outputs 92,94 can independently be driven between 0V and Vcc in order that the microcontroller can selectively illuminate the LED 52 in either of its two colours.

A memory device 100 is provided within which the microcontroller 50 can store data for subsequent retrieval. In this embodiment, the memory device 100 is a 128-bit serial access EEPROM device.

Within the conversion unit, the signal line terminals marked 1 are interconnected, as are the signal terminals marked 2. A signal input to the conversion circuit is derived across the pairs of terminals 1 and 2.

A Zener diode D14 is connected across the signal input, which is then fed to an arrangment of four diodes D8,D9,D10,D11 configured to act as a bridge rectifier, the output of which appears at a circuit point 160.

The circuit point 160 is connected through a diode D13 and a resistor R25 to a power supply stage 162. The power supply stage 162 incorporates a current source IC3 to provide a regulated output at Vcc.

A signal reception stage 166 has an input connected to the circuit point 160 and an output connected to a digital input 168 of the microcontroller 50. The signal reception stage 166 detects voltage pulses applied to the signal line 16 by the central control unit 14.

The input of the signal reception stage 166 is fed to a series-connected capacitor C9 and resistor R14 to a circuit point 170. The circuit point 170 is connected to the 0V line by a capacitor C1 and through a diode D3 to the base of a transistor T6. Two resistors R15,R16 connect respective opposite sides of the diode D3 to the 0V line. The collector of the transistor T6 is connected to the positive supply line Vcc through a resistor R16. The emitter of the transistor T6 is connected to the 0V line. The output of the signal reception stage 166 is taken from the collector of the transistor, there being a capscitor connected between the output and the 0V line.

The reception stage 166 operates by filtering any steady DC component from the signal on its input by means of the capacitor C9. The transistor T6 can then be turned on and off in the presence and absence of voltage pulses in the signal line. This gives rise to negative-going pulses appearing on the digital input 94 to the microcontroller 50.

A signal generation stage 176 has an input connected to a digital output 178 of the microcontroller and an output connected through a resistor R4 to the circuit point 160.

The signal generation stage 176 comprises a transistor T3 the base of which is connected through a resistor R3 to the input of the signal generation stage 176 and through a resistor R2 to the 0V line, and the emitter of which is connected through a resistor R1 to the 0V line. The output of the signal generation stage 176 is connected to the collector of the transistor T3.

It will be seen that if the microcontroller 50 raises its digital output 178, the transistor T3 will be turned on. This will result in current being drawn from the signal line 16, this being detectable by the central control unit 14.

Operation of each of the luminaires 10 will now be described.

Prior to installation, each luminaire must be configured such that it is assigned an address number which is unique within the system. This is done by connecting a programming device 11 to the signal line input of the testing circuit 40 before the testing circuit is connected to the signal line 16. The programming device 11 acts supplies the testing circuit 40 with power, and also generates a programming signal incorporating an address number chosen by an operator. On detection of the programming signal, the microcontroller 50 operates to store the address number in the memory device 100. The address number will remain stored in the memory device 100 until it is changed by an operator.

In normal operation, the microcontroller 50 monitors signals received from the signal line 16 until it detects a signal which contains its address, as stored in the memory device 100. The content of the signal is then assessed.

If the signal is a routine polling signal, the microcontroller 50 then analyses the signals received from the current measurement stage 72 and the voltage measurement stage 88. If these signals indicate that the current and voltage are within the range expected for a battery being charged normally, the microcontroller 50 places a signal on the signal line 16 to indicate satisfactory operation, and it places signals on its first and second digital output lines 92, 94 to cause the LED 52 to glow green.

In the event that the current and/or the voltage detected by the current measurement stage 72 and the voltage measurement stage 88 indicate that the battery is not being satisfactorily charged, the microcontroller 50 places a signal on the signal line 16 to indicate this fact to the central control unit 14, and it places signals on its first and second digital output lines 92, 94 to cause the LED 52 to glow yellow.

In the event that the luminaire has become activated by a local mains failure, the battery current flowing in the conductors 66,68 will be reversed in direction. This will be detected by the microcontroller 50, which will then place a signal on the signal line 16 to indicate this fact to the central control unit 14.

If, during normal operation, the microcontroller 50 detects that a first testing signal has been addressed to it, then a first testing mode of operation will commence. In the first testing mode, the microcontroller 50 energises its digital output 60 to energise the solenoid 58 to turn off the relay 56, and thereby simulate a local mains failure. This should cause the lamp 34 to be illuminated by power from the battery 32. The microcontroller 50 then maintains this condition for a predetermined discharge period (in this embodiment, 5 minutes) to allow the operating conditions of the lamp 34 to stabilise. The microcontroller 50 then analyses the signals received from the current measurement stage 72 and the voltage measurement stage 88. If these signals indicate that the current and voltage are within the range expected for a battery being discharged so as to satisfactorily illuminate the lamp 34, the microcontroller 50 places a signal on the signal line 16 to indicate satisfactory operation, and it places signals on its first and second digital output lines 92, 94 to cause the LED 52 to glow green. On the other hand, if these signals indicate that the current and voltage are outwith the satisfactory range, the microcontroller 50 places a signal on the signal line 16 to indicate that there is an apparent fault in the luminaire 10, and it places signals on its first and second digital output lines 92, 94 to cause the LED 52 to glow yellow. Finally, the microcontroller 50 energises its digital output 62 to energise the solenoid 59 to turn on the relay 56, and thereby restore the supply of mains power.

If, during normal operation, the microcontroller 50 detects that a second testing signal has been addressed to it, then a second testing mode of operation will commence. The second testing mode proceeds much as does the first, with the exception that the discharge period is greater. In this example, the discharge duration in the second testing mode is between 1 and 3 hours such that the battery 32 is discharged to a significant extent.

Operation of the program within the central control unit 14 will now be described.

During installation, the computer 20 is used to store in the central control unit 14 information about the luminaires 10 of the system. For example, this information may include a description of the location of the luminaire 10 in a building. This information may be used to help a user to operate the system by providing a memorable description of each luminaire 10 thereby removing the need for users to identify luminaires by number alone. Additionally, it may be used to assign individual luminaires 10 to a group of luminaires which will be tested simultaneously in the second test sequence, to be described below.

In a normal operating mode, the central control unit 14 operates in a cycle to apply to the signal line 16 a polling signal addressed to a first luminaire 10, and awaits the response generated by the microcontroller of that luminaire 10. If the response indicates that the luminaire is in a condition for satisfactory operation, then the procedure is repeated with the other luminaires. The cycle is repeated indefinitely.

In the event that the response indicates any other condition, the central control unit 14 issues an audible and/or visual warning to alert an operator to the existence of an exceptional condition, and also to identify the particular luminaire at fault or which has detected a mains failure, as the case may be.

Once in a first predetermined period (in this embodiment, weekly) the central control unit 14 automatically initiates a first test sequence in which it sends the first test signal to a first luminaire 10. The central control unit 14 awaits a signal from the luminaire. If this indicates that there is an apparent fault in the luminaire 10, then the central control unit 14 issues an audible and/or visual warning to alert an operator to the fact that a fault has been detected, and together with an indication to identify the particular luminaire at fault. The procedure is repeated for all luminaires 10 in the system.

A second test sequence is initiated periodically, typically, once per year. The second test sequence is substantially the same as the first test sequence with the exception that the second test signal is sent in place of the first test signal.

It is normally the case that the second test sequence is initiated under manual control of an operator - this is desirable since after the second test sequence some luminaires 10 may be in a completely discharged condition, so it may be preferred to carry out the second test sequence during a time where the inconvenience that this might cause is minimised. The central control unit 14 provides a visual and/or an audible prompt to an operator when the second test sequence is due to be carried out. In the event that the operator ignores the prompt for a predetermined period (e.g. 1 week) the central control unit 14 will initiate the second test sequence automatically.

If the second test sequence were to cause all of the luminaires 10 to enter the second testing sequence at the same time, the possibility could arise of a large number of the luminaires being in a discharged state simultaneously. Therefore, the second test sequence is configured such that luminaires enter the second test sequence in groups. Such groups are chosen so as to minimise the consequences of multiple members of the group being inoperative for a time after the test. For example, groups can be chosen such that they do not contain several luminaires which are disposed close to one another so that there is little risk of a large area being deprived of emergency lighting.

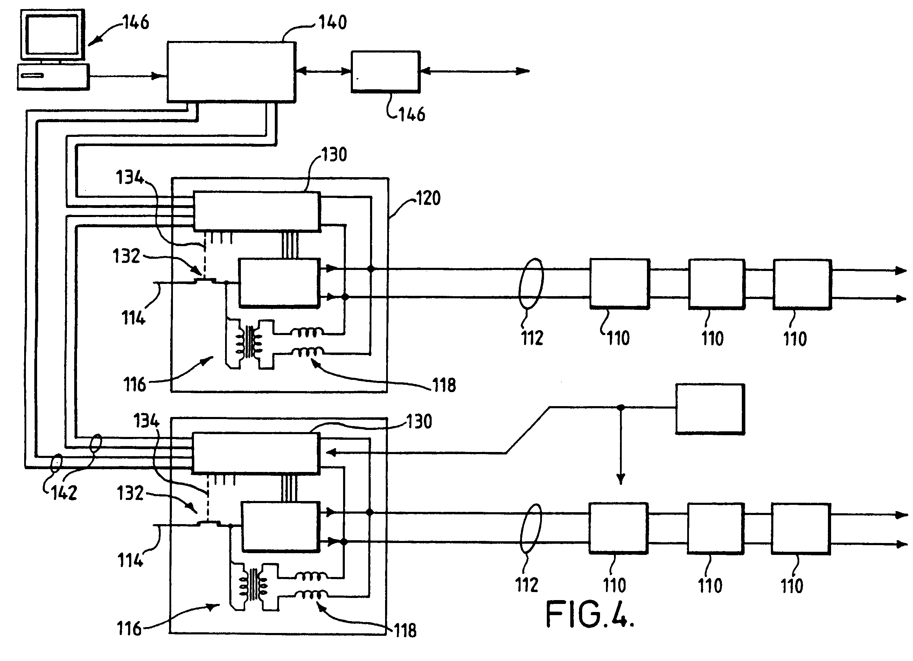

With reference now to Figure 4, there is shown an emergency lighting system of a type commonly known as a central battery system. In the embodiment of Figure 4, each luminaire 110 is supplied with power from a power line 112. The power supply line 112 receives its power from a battery system 120. As with the first embodiment, during installation each luminaire 110 is assigned an address unique within the system by means of a programming unit 136.

The battery system 120 has as an input a supply of mains power 114 which is fed through a latching relay 132. The relay 132 is closed in normal use. As a main supply of power for the luminaires 110, mains power is supplied to the power supply line 112 having had its voltage reduced by a transformer 116 and having been processed, for example by a filter 118. The battery system 120 further comprises a battery module 122 which is connected to the power supply line 112 and to the input supply of mains power 114. Mains power is fed to the battery module 122 in order to maintain the battery module 122 in a charged state. The battery module 122 also contains circuitry to detect failure of the input supply of mains power 114, which operates in response to supply power from the battery module to the power supply line 112 as an auxiliary power supply for the luminaires 110.

Each battery system also comprises a test module 130, which will be described below.

An entire emergency lighting system may comprise one or more battery systems 120 each associated with a respective power supply line 112 and luminaires.

A central control unit 140 is connected to each of the battery system 120 by a signal line 142 connected in a loop in a manner similar to that of the first embodiment. Additionally, the central control unit 142 has interfaces for connection to a computer 144 and further similar control units via an interface 146. These connections serve the same function as corresponding features of the first embodiment, and will therefore not be described further.

The test module 130 is connected to the signal line 112, to the power supply line 112, and has an output 134 to control the relay 132. Thus, luminaires 110 within the system can be continually polled and can also be periodically tested in a manner entirely analogous to that of the first embodiment.

In the present embodiments, signals are sent on the signal line 16 to the testing circuit in a protocol which defines a 9-bit address, an 8-bit voltage field, an 8-bit current field, a 3-bit status field and a checksum. A supply voltage in the range 8-24V is applied to the signal line 16. Data is encoded in voltage pulses of 3-17V above this value applied by the central control unit 14 to the signal line 16. The length of each pulse determines whether it encodes a logical 1 or a logical 0.

The testing circuit 40 generates current pulses in between voltage pulses. The presence of a current pulse encodes a logical 1 and the absence of a current pulse encodes logical 0.

In an enhancement to an emergency lighting unit, such an one used in the above described system or a stand-alone unit, an inhibit control signal may be sent from the central control unit 14 to one or more of the luminaires 10 to indicate that the building or other zone illuminated by them is unoccupied. Upon receipt of this inhibit signal, the luminaire 10 enters a mode in which a local mains failure does not change state to cause the luminaire 10 to become illuminated. This prevents the discharge of the secondary power supply for the luminaire. When the building or the zone, as the case may be, becomes occupied once again, a re-enabling signal is sent to the or each luminaire, so that it once again functions to provide emergency illumination in the event of a mains failure.

As will be understood, it is a simple matter to incorporate such a signal into the signalling protocol of a system as described above, or to any other system of emergency luminaires.

## Claims

1. An emergency lighting system comprising:
a main power supply;
a plurality of lighting units each having mains failure circuitry to monitor the main supply and to connect the lighting unit for operation to an auxiliary power supply in the event of failure of the main power supply, and a testing circuit operative, on receipt of a command, to assess the condition of operational readiness of the lighting unit;
a control unit;
a signal line connected to the control unit and to the tasting circuit of one or more of the lighting units;
wherein the control unit is operative to apply signals to the signal line and detect signals which have been applied to the signal line by a testing circuit;
each one of the testing circuits is identified as from the others by an address, and is operative, on detection of a signal indicating its address on the signal line, to apply to the signal line a signal indicative of the operational readiness of the associated lighting unit.

2. An emergency lighting system according to claim 1 in which the testing circuit assessees the operational readiness of the lighting unit by measurement of a current or a voltage in the lighting unit.

3. An emergency lighting system according to claim 1 or claim 2 in which the testing circuit is supplied with power from the signal line.

4. An emergency lighting system according to any preceding claim in which data is transmitted in the signal line from the central control unit to the testing circuit as a plurality of voltage pulses.

5. An emergency lighting system according to any preceding claim in which data is transmitted in the signal line from the testing circuit to the central control unit as a plurality of current pulses.

6. An emergency lighting system according to any preceding claim in which the testing circuit can operate in a plurality of modes, such modes including a normal mode in which each lighting unit can be checked frequently by the central control unit to ascertain whether the lighting unit is charging normally, has detected a local mains failure, or has ceased to charge properly due to an apparent fault.

7. An emergency lighting system according to claim 6 in which the testing circuit can operate in an additional mode in which a test is carried out on the lighting unit to assess whether it is capable of operation by the auxiliary power supply for a predetermined period.

8. An emergency lighting system according to claim 7 in which there is a first test mode in which each lighting unit is operated by the auxiliary power supply automatically periodically for a predetermined period, at least at the end of which period the current and voltage supplied by the auxiliary power supply is measured and assessed.

9. An emergency lighting system according to claim 8 in which there is a second test mode in which each lighting unit is operated by the auxiliary power supply under manual control periodically for a predetermined period, at least at the end of which period the current and voltage supplied by the auxiliary power supply is measured and assessed.

10. An emergency lighting system according to any preceding claim in which the central control unit includes programmable data storage means in which information relating to the lighting units of the system can be stored.

11. An emergency lighting system according to any preceding claim in which the address of each of the testing circuits can be set by applying a signal to the testing circuit in order that the address value is stored in a memory device.

12. An emergency lighting system according to claim 11 further comprising a programming device connectable to the testing circuit to store an address in a memory device.

13. An emergency lighting system comprising:
a plurality of lighting units each connected to a power supply line;
a central control unit;
a main power supply and an auxiliary power supply;
a circuit control unit having mains failure circuitry to monitor the main supply and to connect the power supply line to the main power supply during such time as the main power supply is operational to connect the power supply line to the auxiliary power supply in the event of failure of the main power supply,
and a first testing circuit associated with the circuit control unit operative, on receipt of a command from the central control unit to simulate a failure of the main power supply and to assess the response of the circuit control unit thereto;
a system control unit;
a signal line connected to the control unit and to the circuit control unit;
wherein the system control unit is operative to apply signals to the signal line and detect signals which have been applied to the signal line by the circuit control unit or luminaires attached thereto;
each one of the lighting units and the circuit control unit is identified as from the others by an address, and is operative, on detection of a signal indicating its address on the signal line, to apply to the signal line a signal indicative of the operational readiness of the associated unit.

14. An emergency lighting system substantially as herein described with reference to the accompanying drawings.

15. An emergency lighting system optionally in accordance with any preceding claim comprising:
a main power supply;
a plurality of lighting units each having mains failure circuitry to monitor the main supply and to connect the lighting unit for operation to an auxiliary power supply in the event of failure of the main power supply
a control unit;
a signal line connected to the control unit and to the testing circuit of one or more of the lighting units;
wherein the control unit is operative to apply signals to the signal line, there being at least a first such signal operative to inhibit illumination of the luminaire upon failure of the main supply and a second signal operative to re-enable illumination of the luminaire upon failure of the main supply.
